# EUROPÄISCHE PATENTSCHRIFT

(11) **EP 3 491 226 B1**
(45) Veröffentlichungstag und Bekanntmachung des Hinweises auf die Patenterteilung: **09.09.2020**
(21) Anmeldenummer: 17739258.6
(22) Anmeldetag: 12.07.2017
(51) Int. Cl.: F02B 37/18

(54) **KLAPPENEINRICHTUNG ZUM OEFFNEN UND SCHLIESSEN EINES WASTEGATEKANALS IN EINEM TURBINENGEHAEUSE EINES TURBOLADERS, TURBOLADER SOWIE VERFAHREN ZUR HERSTELLUNG**
FLAP DEVICE FOR OPENING AND CLOSING A WASTEGATE CHANNEL IN A TURBINE HOUSING OF A TURBOCHARGER, TURBOCHARGER, AND METHOD FOR PRODUCTION
DISPOSITIF CLAPET PERMETTANT D'OUVRIR ET DE FERMER UN CONDUIT DE SOUPAPE DE DÉCHARGE DANS UN CARTER DE TURBINE D'UN TURBOCOMPRESSEUR, TURBOCOMPRESSEUR ET PROCÉDÉ DE FABRICATION

(30) Priorität: 27.07.2016 DE 102016213770
(43) Veröffentlichungstag der Anmeldung: 05.06.2019
(73) Patentinhaber: Vitesco Technologies GmbH, 30165 Hannover (DE)
(72) Erfinder: HILLER, Marc, 55232 Alzey (DE)
(74) Vertreter: Waldmann, Georg Alexander
(86) Internationale Anmeldenummer: PCT/EP2017/067541
(87) Internationale Veröffentlichungsnummer: WO 2018/019589

(56) Entgegenhaltungen:
- WO-A2-2010/133293
- DE-A1-102010 055 382
- DE-A1-102011 075 201
- DE-A1-102012 201 011
- DE-A1-102015 209 042
- DE-U1-202010 005 747

## Beschreibung

Die Erfindung betrifft eine Klappeneinrichtung zum Öffnen und Schließen eines Wastegatekanals in einem Turbinengehäuse eines Turboladers. Die Erfindung betrifft darüber hinaus einen Turbolader für eine Brennkraftmaschine sowie ein Verfahren.

Abgasturbolader werden vermehrt zur Leistungssteigerung bei Kraftfahrzeug-Verbrennungsmotoren eingesetzt. Dies geschieht immer häufiger mit dem Ziel, den Verbrennungsmotor bei gleicher oder gar gesteigerter Leistung in Baugröße und Gewicht zu reduzieren und gleichzeitig den Verbrauch und somit den CO₂-Ausstoß, im Hinblick auf immer strenger werdende gesetzliche Vorgaben diesbezüglich, zu verringern. Das Wirkprinzip besteht darin, die im Abgasstrom enthaltene Energie zu nutzen, um einen Druck in einem Ansaugtrakt des Verbrennungsmotors zu erhöhen und so eine bessere Befüllung eines Brennraumes des Verbrennungsmotors mit Luft-Sauerstoff zu bewirken. Somit kann mehr Treibstoff, wie Benzin oder Diesel, pro Verbrennungsvorgang umgesetzt werden, also die Leistung des Verbrennungsmotors erhöht werden.

Dazu weist der Abgasturbolader eine im Abgastrakt des Verbrennungsmotors angeordnete Abgasturbine, einen im Ansaugtrakt angeordneten Frischluftverdichter und ein dazwischen angeordnetes Läuferlager auf. Die Abgasturbine weist ein Turbinengehäuse und ein darin angeordnetes, durch den Abgasmassenstrom angetriebenes Turbinenlaufrad auf. Der Frischluftverdichter weist ein Verdichtergehäuse und ein darin angeordnetes, einen Ladedruck aufbauendes Verdichterlaufrad auf. Das Turbinenlaufrad und das Verdichterlaufrad sind auf den sich gegenüberliegenden Enden einer gemeinsamen Welle, der sogenannten Läuferwelle, drehfest angeordnet und bilden so den sogenannten Turboladerläufer. Die Läuferwelle erstreckt sich axial zwischen Turbinenlaufrad und Verdichterlaufrad durch das zwischen Abgasturbine und Frischluftverdichter angeordnete Läuferlager und ist in diesem, in Bezug auf die Läuferwellenachse, radial und axial drehgelagert. Gemäß diesem Aufbau treibt das vom Abgasmassenstrom angetriebene Turbinenlaufrad über die Läuferwelle das Verdichterlaufrad an, wodurch der Druck im Ansaugtrakt des Verbrennungsmotors, bezogen auf den Frischluftmassenstrom hinter dem Frischluftverdichter, erhöht und dadurch eine bessere Befüllung des Brennraumes mit Luft-Sauerstoff bewirkt wird.

In Abgasturboladern wird die Drehzahl und Leistung der Turbine häufig geregelt, in dem ein Wastegateventil geregelt geöffnet oder geschlossen wird, um einen Teil des Abgases über einen Wastegatekanal an der Turbine vorbei zu leiten. Dieses Wastegateventil weist typischerweise eine Klappeneinrichtung auf und besteht zumeist aus mehreren Teilen.

Ein solches Wastegate-Klappenventil ist beispielsweise in Dokument DE 10 2015 209 042 A1 offenbart und umfasst einen Klappenteller sowie eine mit dem Klappenteller verbundene Spindel. Die Verbindung zwischen dem Klappenteller und der Spindel ist über einen von der Spindel abstehenden Spindelarm der Spindel realisiert. In dem Spindelarm ist ferner eine Spindelöffnung ausgebildet, welche von einem vom Klappenteller abstehenden Dorn des Klappentellers durchsetzt wird. Des Weiteren ist ein Sicherungsring vorgesehen, der mit dem Kopf des Dorns zusammenwirkt, um den Klappenteller zu halten. Zwischen dem Spindelarm und dem Dorn, ist ein Spiel vorgesehen, um zur besseren Abdichtung eine Lageanpassung des Klappentellers in Bezug auf den Ventilsitz zu ermöglichen. Dieses Spiel kann beim Betrieb des Klappenventils zu einer Geräuschentwicklung führen, die in diesem Beispiel durch die Anordnung eines Federelements in der Spindelöffnung zwischen dem Spindelarm und dem Dorn verhindert werden soll.

Weiterhin ist aus dem Dokument DE 10 2010 055 382 A1 ein weiteres Wastegate-Klappenventil bekannt, wobei die Abgasklappe über einen angeformten Zapfen in einer Ausnehmung des Stellarmes gehalten ist, und wobei zwischen dem Stellarm und der Abgasklappe ein um den Zapfen herum angeordnetes Dämpfungselement eingesetzt ist, das dadurch gekennzeichnet ist, dass es durch ein zu einer Büchse vorgeformtes Drahtgeflecht gebildet ist, das um den Zapfen herum an diesem sowie am Stellarm und an der Abgasklappe anliegend angeordnet ist.

Auch in Dokument DE 10 2011 075 201 A1 wird eine Wastegate-Ventilvorrichtung offenbart mit einem Antriebsstrang, der einen Aktuatorenhebel, eine drehfest mit dem Aktuatorenhebel verbundene Spindel mit einem davon abstehenden Spindelarm sowie einen am Spindelarm befestigten Ventilteller aufweist. Ein besonders geräuscharmer Betrieb der Ladeeinrichtung ergibt sich hier dadurch, dass zumindest ein Dämpfungselement zwischen den Bestandteilen des Antriebsstrangs angeordnet ist.

Eine Aufgabe, die der Erfindung zugrunde liegt, ist es, ein Konzept für eine Klappeneinrichtung eines Turboladers anzugeben, welche eine effiziente Abdichtung des Wastegatekanals ermöglicht und gleichzeitig besonders geräuscharm betrieben werden kann.

Es wird eine Klappeneinrichtung zum Öffnen und Schließen eines Wastegatekanals in einem Turbinengehäuse eines Turboladers offenbart. Die Klappeneinrichtung weist ein Hebelelement mit einer Durchgangsbohrung auf, in der eine zylindrische Buchse angeordnet ist. Weiter ist eine Klappe mit einem Stift vorgesehen, die so an dem Hebelelement angeordnet ist, dass der Stift durch die Buchse geführt ist. Weiter ist eine Deckscheibe vorgesehen, die auf einer der Klappe gegenüberliegenden Seite angeordnet ist und eine Öffnung hat, durch die der Stift der Klappe geführt ist. Die Klappe ist mittels des Stifts mit dem Hebelelement vernietet.
Erfindungsgemäß weist die Buchse zumindest eine Nut auf, die vorzugsweise am Außenumfang der Buchse angeordnet ist und in axialer Richtung der Buchse verläuft, und in welcher ein Federblech so eingebracht ist, dass zwischen der Durchgangsbohrung und der Buchse eine radiale Klemmkraft des Federblechs wirkt. Mit anderen Worten ermöglicht das Federblech eine radiale Federwirkung zwischen dem Hebelelement und der Buchse. Unter "Einbringen" wird beispielswiese ein Einstecken, Einführen oder Anordnen unter Bildung eines Formschlusses verstanden. Das Federblech kann vorgebogen sein. Das Federblech steht zumindest teilweise von der Buchse radial und/oder axial ab. Diese Art des Kraftschlusses sorgt dafür, dass die Teile nicht mehr lose ineinander liegen. Geräusche, wie das eingangs erwähnte Klappern, werden vermieden oder besonders effizient reduziert. Alternativ können auch mehrere Nuten und dazu korrespondierend mehrere Federbleche vorhanden sein. Bevorzugt sind zumindest drei Federbleche oder mehr vorgesehen. Die Nut kann auch als Schlitz bezeichnet werden. Das oder die Federbleche ermöglichen dennoch einen Spiel- und Verformungsausgleich während des Betriebs der Klappeneinrichtung.

Die Klappeneinrichtung kann als Teil eines Wastegateventils bezeichnet werden, welches eine Bypass-Ventileinrichtung auf einer Turbinenseite eines Turboladers darstellt. Bei der Klappe handelt es sich beispielsweise um einen Klappenteller, der eingerichtet und ausgebildet ist zur Auflage auf einem Wastegateventilsitz . An dem Klappenteller beziehungsweise an der Klappe ist der Stift angeformt, der auch als Pin bezeichnet werden kann. Der Stift ist auf einer dem Hebel zugewandten Seite der Klappe angeordnet und erstreckt sich im Wesentlichen normal von der Klappe durch die Durchgangsbohrung des Hebelelements. Die Klappe mit Stift kann auch als Niet bezeichnet werden.

Das Hebelelement ist beispielsweise Teil einer rotierbaren Spindel, die über einen Aktuator in bekannter Weise angesteuert werden kann. Dadurch ist die Klappe zwischen einer Schließstellung, in der sie auf einem Ventilsitz zum Abdichten des Wastegatekanals aufliegt, und einer Offenstellung, in der der Wastegatekanal zumindest teilweise freigegeben ist, betätigbar. Das Hebelelement ist im Bereich der Durchgangsbohrung zwischen der Deckscheibe und der Klappe beziehungsweise der dem Hebelelement zugewandten Seite der Klappe angeordnet. Die Buchse ist zwischen dem Stift und der Durchgangsbohrung beziehungsweise einer Innenwand der Durchgangsbohrung angeordnet. Beim Vernieten wird der durch die Deckscheibe überstehende Teil des Stifts vernietet, so dass eine formschlüssige Verbindung zwischen dem Stift und der Deckscheibe erreicht ist. Das Hebelelement ist dann zwischen der Deckscheibe und der Klappe eingeschlossen.

Grundsätzlich sind axiale und radiale Spiele bei Klappeneinrichtungen notwendig, um Fertigungstoleranzen und/oder Verformungen im Betrieb eines Turboladers, etwa thermisch bedingte Verformungen, kompensieren und den Wastegatekanal zuverlässig schließen und öffnen zu können. Das Vorsehen der Buchse ermöglicht es jedoch, vor dem Nietprozess im Gegensatz zu Anordnungen ohne Buchse sehr geringe Spiele, etwa axiale und radiale Spiele, vorzusehen. Dadurch kann auf der einen Seite zwar ein erforderliches Spiel für den Betrieb gewährleistet werden, andererseits kann dieses so gering ausgelegt sein, dass die Klappeneinrichtung besonders geräuscharm ist. Weiterhin kann auch ein axiales Spiel, etwa zwischen der Klappe beziehungsweise dem Klappenteller und dem Hebelelement und/oder zwischen dem Hebelelement und der Deckscheibe besonders gering und exakt ausgebildet sein.
Auch dies begünstigt die vorgenannten Vorteile. Im Gegensatz dazu wären bei einen Nietprozess ohne Buchse besonders große Spiele notwendig, da es sich typischerweise bei Nieten um einen eher ungenauen und groben Fertigungsprozess handelt. Hier und nachfolgend bedeutet eine axiale Richtung eine Richtung, die parallel zu einer Bohrungsachse der Durchgangsbohrung verläuft. Eine radiale Richtung bezieht sich auf eine zu der Bohrungsachse senkrechte radiale Richtung.

Als weiterer Vorteil ergibt sich, dass auf ein Verschweißen des Stifts mit der Deckscheibe verzichtet werden kann. Somit können Kosten im Vergleich zum Nieten eingespart werden, etwa aufgrund von Komplexität und der verwendeten Materialien, ohne jedoch auf die geringen Spaltmaße verzichten zu müssen. Weiterhin wurde erkannt, dass die Schweißverbindung anfällig für ein Aufreißen in einem Betrieb des Turboladers ist.
Gemäß einer Ausgestaltung sind die Durchgangsbohrung, die Buchse und der Stift so zueinander dimensioniert, dass vor dem Vernieten zwischen Buchse und Bohrung sowie zwischen Buchse und Stift ein radiales Spiel ausgebildet ist. Nach dem Vernieten weitet sich der Pin im Bereich der Buchse radial so aus, dass er die Buchse teilweise oder vollständig ausfüllt. Die Buchse selbst wird durch den Nietprozess im Wesentlichen nicht radial aufgeweitet. Dies trägt dazu bei, dass das Spiel zwischen Buchse und Hebelelement von Anfang an gering und exakt gehalten werden kann. Mit anderen Worten verbleibt zumindest zwischen Buchse und Hebelelement ein radiales Spiel, welches wie zuvor beschrieben jedoch besonders exakt und klein ausgelegt ist. Das radiale Spiel beträgt beispielsweise 50 bis 100 µm.

Gemäß einer weiteren Ausgestaltung liegt die Deckscheibe auf der Buchse auf. Dadurch kann das axiale Spiel zwischen den Bauteilen kleiner und exakt ausgeführt werden. Dies liegt unter anderem daran, dass sich die Deckscheibe beim Umformprozess auf der Buchse abstützt und der Niet, etwa der Stift, während des Nietprozesses axial von der Buchse losgelöst ist.

Gemäß einer weiteren Ausgestaltung sind die Deckscheibe und die Buchse einstückig ausgebildet. Dadurch wird zu einer vereinfachten Montage beigetragen, da es weniger Bauteile gibt. Weiterhin liegt die Deckscheibe positionsgenauer auf.

Gemäß einer weiteren Ausgestaltung ist das Federblech so ausgebildet und/oder in die Nut eingebracht, dass dieses bezüglich einer axialen Erstreckungsrichtung der Buchse in einem montierten Zustand vor dem Vernieten an zumindest einem axialen Ende der Buchse übersteht und nach dem Vernieten eine axiale Klemmkraft des Federblechs bezüglich der axialen Erstreckungsrichtung wirkt.

Beispielsweise ist das Federblech rautenförmig, trapezförmig oder dergleichen ausgebildet. Das Federblech ist also im vernieteten Zustand bezüglich der axialen Erstreckungsrichtung verklemmt. Beispielsweise ist das Federblech zwischen der Deckscheibe und dem Klappenteller oder zwischen der Deckscheibe und der Buchse selbst verklemmt. Dadurch wird besonders gut zur Geräuschvermeidung oder -unterdrückung, wie oben beschrieben, beigetragen. Analog zu oben ist der Spiel- und Verformungsausgleich gegeben. Alternativ kann das Federblech an beiden gegenüberliegenden axialen Enden der Buchse überstehen.

Die Nut kann sich je nach Ausgestaltung durchgehend über die gesamte axiale Erstreckungsrichtung der Buchse erstrecken oder auch nur teilweise.

Des Weiteren wird ein Turbolader für eine Brennkraftmaschine offenbart. Der Turbolader weist ein Lagergehäuse auf, in dem eine Läuferwelle drehbar gelagert ist. Weiter ist ein Turbinenrad vorgesehen, welches drehfest auf der Läuferwelle angeordnet ist. Der Turbolader weit ein Turbinengehäuse auf, welches mechanisch in dem Lagergehäuse festgelegt ist. Weiter weist der Turbolader einen Wastegatekanal auf, der in dem Turbinengehäuse ausgebildet ist. Schließlich ist eine Klappeneinrichtung gemäß einer der vorbeschriebenen Ausgestaltungen vorgesehen, die zum Öffnen und Schließen des Wastegatekanals eingerichtet ist.

Der Turbolader ermöglicht im Wesentlichen die vorgenannten Vorteile und Funktionen.

Des Weiteren wird ein Verfahren zum Herstellen einer Klappeneinrichtung gemäß einem der vorbeschriebenen Ausgestaltungen beschrieben. Das Verfahren weist die folgenden Schritte auf:
- Bereitstellen eines Hebelelements mit einer Durchgangsbohrung;
- Einbringen einer Buchse in die Durchgangsbohrung des Hebelelements; wobei die Buchse zumindest eine Nut aufweist, in die vor dem Einbringen der Buchse in die Durchgangsbohrung ein Federblech eingebracht wird und wobei die Buchse zusammen mit dem Federblech in die Durchgangsbohrung eingebracht wird, so dass eine radiale Klemmkraft zwischen der Durchgangsbohrung und der Buchse wirkt;

- Bereitstellen einer Klappe mit einem Stift;
- Anordnen der Klappe an dem Hebelelement derart, dass der Stift durch die Buchse geführt ist;
- Aufsetzen einer Deckscheibe auf einer der Klappe gegenüberliegenden Seite derart, dass der Stift durch eine Öffnung der Deckscheibe hinausragt;
- Vernieten der Klappe mit dem Hebelelement mittels des hinausragenden Stifts.

Beispielsweise wird dabei das Federblech durch Ausübung einer Kraft gegen die Buchse so gebogen, dass die Buchse mit dem Federblech in die Durchgangsbohrung eingeschoben werden kann. Wenn dann die Kraft auf das Federblech weggenommen wird, kann sich das Federblech ausdehnen innerhalb des Spielbereichs zwischen Bohrung und Buchse.

Das Verfahren ermöglicht im Wesentlichen die vorgenannten Vorteile und Funktionen. Die oben erwähnten Merkmale und Funktionen gelten auch für das beschriebene Verfahren, insbesondere trägt dies dazu bei, dass die Teile nicht mehr lose ineinander liegen und Geräusche wie ein Klappern vermieden oder erheblich reduziert werden.

Gemäß einer Ausgestaltung ist nach den Anordnungen der Klappe an dem Hebelelement zwischen dem Stift und der Buchs sowie zwischen der Buchse und der Durchgangsbohrung jeweils ein radiales Spiel ausgebildet. Dadurch wird beim Vernieten des Stiftes der Stift innerhalb der Buchse aufgeweitet und füllt die Buchse auf. Die Buchse selbst wird durch den Nietprozess im Wesentlichen nicht radial aufgeweitet. Dadurch werden die eingangs genannten Vorteile und Funktionen ermöglicht.

Gemäß einer weiteren Ausgestaltung ist das Federblech so ausgebildet und/oder in der Nut angeordnet, dass vor dem Vernieten das Federblech zumindest teilweise an einem axialen Ende der Buchse übersteht, und beim Vernieten das Federblech axial verklemmt wird und eine axiale Klemmkraft des Federblechs bezüglich einer axialen Erstreckungsrichtung der Buchse wirkt. Dadurch werden die eingangs genannten Vorteile und Funktionen ermöglicht.

Optional können das oder die Federbleche auch ein einem Schritt vorgebogen oder vorumgeformt sein, bevor diese in die Nuten eingefügt werden.

Weitere Vorteile und Funktionen sind in der nachfolgenden, ausführlichen Beschreibung eines Ausführungsbeispiels offenbart.

Das Ausführungsbeispiel wird unter Zuhilfenahme der angehängten Figuren nachfolgend beschrieben. Gleichartige oder gleichwirkende Elemente sind figurenübergreifend mit den gleichen Bezugszeichen versehen.

In den Figuren zeigen:
- Figur 1: eine schematische Schnittansicht eines Turboladers,
- Figuren 2A und 2B: schematische Ansichten einer Klappeneinrichtung gemäß einem Ausführungsbeispiel,
- Figur 3: eine schematische Teilansicht eines Querschnitts einer Klappeneinrichtung gemäß einem Ausführungsbeispiel der Erfindung,
- Figur 4: eine Buchse gemäß einem weiteren Ausführungsbeispiel der Erfindung,
- Figuren 5A und 5B: ein Federblech gemäß einem Ausführungsbeispiel der Erfindung,
- Figur 6: eine Aufsicht einer Buchse gemäß einem weiteren Ausführungsbeispiel,
- Figur 7: die Buchse gemäß Figur 6 mit montierten Federblechen gemäß Figuren 5A und 5B,
- Figur 8: die montierte Buchse gemäß Figur 7 bei einem Montagevorgang,
- Figur 9: ein Federblech gemäß einem weiteren Ausführungsbeispiel,
- Figur 10: eine schematische Ansicht einer Buchse mit Federblechen gemäß Figur 9 und
- Figur 11: ein schematisches Ablaufdiagramm eines Herstellungsverfahrens für eine Klappeneinrichtung.

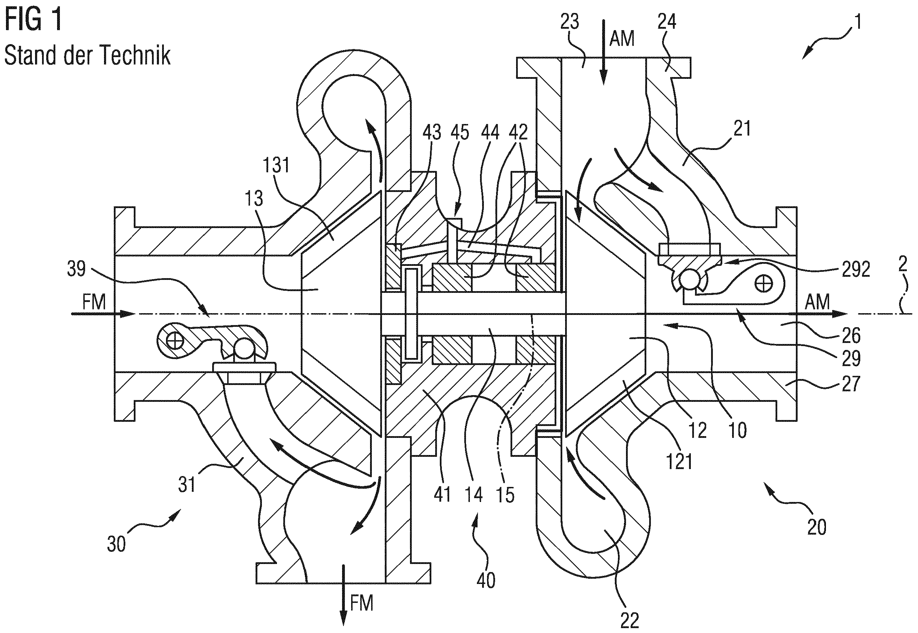

Figur 1 zeigt schematisiert einen exemplarischen Abgasturbolader 1 in Schnittdarstellung, der eine Abgasturbine 20, einen Frischluftverdichter 30 und ein Läuferlager 40 umfasst. Die Abgasturbine 20 ist mit einem Wastegateventil 29 ausgestattet und ein Abgasmassestrom AM ist mit Pfeilen angedeutet. Der Frischluftverdichter 30 weist ein Schub-Umluftventil 39 auf und ein Frischluft-Massestrom FM ist ebenfalls mit Pfeilen angedeutet. Ein sogenannter Turboladerläufer 10 des Abgasturboladers 1 weist ein Turbinenlaufrad 12 (auch Turbinenrad bezeichnet), ein Verdichterlaufrad 13 (auch Verdichterrad bezeichnet) sowie eine Läuferwelle 14 auf (auch Welle bezeichnet) . Der Turboladerläufer 10 rotiert im Betrieb um eine Läuferdrehachse 15 der Läuferwelle 14. Die Läuferdrehachse 15 und gleichzeitig die Turboladerachse 2 (auch Längsachse bezeichnet) sind durch die eingezeichnete Mittellinie dargestellt und kennzeichnen die axiale Ausrichtung des Abgasturboladers 1. Der Turboladerläufer 10 ist mit seiner Läuferwelle 14 mittels zweier Radiallager 42 und einer Axiallagerscheibe 43 gelagert. Sowohl die Radiallager 42 als auch die Axiallagerscheibe 43 werden über Ölversorgungskanäle 44 eines Ölanschlusses 45 mit Schmiermittel versorgt.

In der Regel weist ein gebräuchlicher Abgasturbolader 1, wie in Figur 1 dargestellt, einen mehrteiligen Aufbau auf. Dabei sind ein im Abgastrakt des Verbrennungsmotors anordenbares Turbinengehäuse 21, ein im Ansaugtrakt des Verbrennungsmotors anordenbares Verdichtergehäuse 31 und zwischen Turbinengehäuse 21 und Verdichtergehäuse 31 ein Lagergehäuse 41 bezüglich der gemeinsamen Turboladerachse 2 nebeneinander angeordnet und montagetechnisch miteinander verbunden.

Eine weitere Baueinheit des Abgasturboladers 1 stellt der Turboladerläufer 10 dar, der die Läuferwelle 14, das in dem Turbinengehäuse 21 angeordnete Turbinenlaufrad 12 mit einer Laufradbeschaufelung 121 und das in dem Verdichtergehäuse 31 angeordnete Verdichterlaufrad 13 mit einer Laufradbeschaufelung 131 aufweist. Das Turbinenlaufrad 12 und das Verdichterlaufrad 13 sind auf den sich gegenüberliegenden Enden der gemeinsamen Läuferwelle 14 angeordnet und mit dieser drehfest verbunden. Die Läuferwelle 14 erstreckt sich in Richtung der Turboladerachse 2 axial durch das Lagergehäuse 41 und ist in diesem axial und radial um seine Längsachse, die Läuferdrehachse 15, drehgelagert, wobei die Läuferdrehachse 15 in der Turboladerachse 2 liegt, also mit dieser zusammenfällt.

Das Turbinengehäuse 21 weist einen oder mehrere ringförmig um die Turboladerachse 2 und das Turbinenlaufrad 12 angeordnete, sich schneckenförmig zum Turbinenlaufrad 12 hin verjüngende Abgas-Ringkanäle, sogenannte Abgasfluten 22 auf. Diese Abgasfluten 22 weisen einen jeweiligen oder gemeinsamen, tangential nach außen gerichteten Abgaszuführkanal 23 mit einem Krümmer-Anschlussstutzen 24 zum Anschluss an einen Abgaskrümmer (nicht dargestellt) eines Verbrennungsmotors auf, durch den der Abgasmassenstrom AM in die jeweilige Abgasflute 22 und dann auf das Turbinenlaufrad 12 strömt. Das Turbinengehäuse 21 weist weiterhin einen Abgasabführkanal 26 auf, der vom axialen Ende des Turbinenlaufrades 12 weg in Richtung der Turboladerachse 2 verläuft und einen Auspuff-Anschlussstutzen 27 zum Anschluss an das Auspuffsystem (nicht dargestellt) des Verbrennungsmotors aufweist. Über diesen Abgasabführkanal 26 wird der aus dem Turbinenlaufrad 12 austretende Abgasmassenstrom AM in das Auspuffsystem des Verbrennungsmotors abgeführt.

Turbinen und Verdichter sind Strömungsmaschinen und haben aufgrund der physikalischen Gesetzmäßigkeiten einen jeweils von Baugröße und Bauart abhängigen optimalen Betriebsbereich der durch den Massedurchsatz, das Druckverhältnis und die Drehzahl des jeweiligen Laufrades gekennzeichnet ist. Im Gegensatz dazu ist der Betrieb eines Verbrennungsmotors in einem Kraftfahrzeug von dynamischen Änderungen der Last und des Betriebsbereiches gekennzeichnet.

Um nun den Betriebsbereich des Abgasturboladers 1 an sich ändernde Betriebsbereiche des Verbrennungsmotors anpassen zu können und so ein gewünschtes Ansprechverhalten möglichst ohne spürbare Verzögerungen (Turboloch) zu gewährleisten, werden Abgasturbolader mit zusätzlichen Funktionen, wie zum Beispiel sogenannten variablen Turbinengeometrien (VTG) oder Wastegate-Einrichtungen (WG) auf der Abgas- oder Turbinenseite und Schubumluft- oder Abblas-Einrichtungen auf der Zuluft- oder Verdichterseite ausgestattet. Diese dienen dazu das träge Verhalten und somit das verzögerte Ansprechverhalten des Turboladers zu minimieren und schädliche Betriebszustände zu vermeiden.

Eine entsprechende Bypass-Ventileinrichtung auf der Turbinenseite wird als Wastegate-Ventil 29 bezeichnet. Das Wastegate-Ventil 29 verbindet den Abgaszuführkanal 23 in Strömungsrichtung des Abgasmassenstroms AM vor dem Turbinenlaufrad 12 mit dem Abgasabführkanal 26 in Strömungsrichtung des Abgasmassenstroms AM hinter dem Turbinenlaufrad 12 über einen Wastegatekanal 291 im Turbinengehäuse 21. Das Wastegate-Ventil 29 kann über eine Schließvorrichtung, zum Beispiel eine Klappeneinrichtung 292 geöffnet oder geschlossen werden. Bei niedriger Drehzahl und dem entsprechend kleinem Abgasmassenstrom AM des Verbrennungsmotors ist das Wastegate-Ventil 29 geschlossen und der gesamte Abgasmassenstrom AM wird über das Turbinenlaufrad 12 geführt. Dies gewährleistet eine ausreichende Drehzahl von Turbinen- und Verdichterlaufrad 12, 13 und somit einen ausreichenden Druckaufbau des Verdichters auch bei niedriger Drehzahl des Verbrennungsmotors. Bei hoher Drehzahl und entsprechend großem Abgasmassenstrom AM des Verbrennungsmotors wird dann das Wastegate-Ventil 29 geöffnet und zumindest ein Teil des Abgasmassenstroms AM, am Turbinenlaufrad 12 vorbei, direkt in den Abgasabführkanal 26 in Strömungsrichtung hinter dem Turbinenlaufrad 12 geleitet, um die Drehzahl von Turbinen- und Verdichterlaufrad sowie das Druckverhältnis, insbesondere an der Abgasturbine 20, innerhalb des gewünschten Arbeitsbereichs des Abgasturboladers zu halten.

Weitere Details des Turboladers 1 werden nicht näher erläutert.

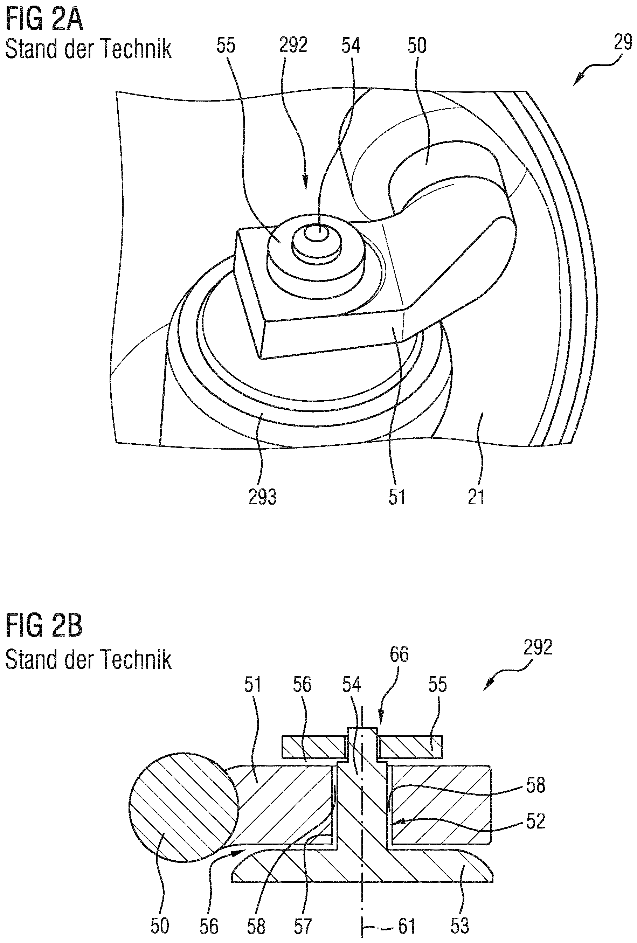

Figuren 2A und 2B zeigen schematisch in einer perspektivischen Teilansicht sowie in einer Querschnittsansicht eine Klappeneinrichtung 292 gemäß einem Ausführungsbeispiel, wobei Figur 2A einen vollständig montierten und vernieteten Zustand und Figur 2B einen Montagezustand vor dem Vernieten zeigt.

Die Klappeneinrichtung 292 ist mehrteilig und hat eine Spindel 50, die ein innenliegendes Hebelelement 51 hat. Das Hebelelement 51 ist somit Teil der Spindel 50. In dem Hebelelement 51 ist eine zylindrische Durchgangsbohrung 52, etwa ein Loch, ausgebildet, in die eine Klappe 53, die auch als Wastegateklappe oder Klappenteller bezeichnet werden kann, mittels eines zylindrischen Stifts 54 eingeführt ist. Der Stift 54 kann auch als Pin bezeichnet werden. Die Durchgangsbohrung 52 hat eine Bohrungsachse 61. Auf einer dem Klappenteller 53 gegenüberliegenden Seite ist eine Deckscheibe 55 aufgelegt, durch die der Stift 54 über eine Öffnung 66 gemäß einer axialen Richtung durchtritt. Der Klappenteller 53 ist über den Stift 54 und die Deckscheibe 55 mit dem Hebelelement 51 vernietet, so dass eine formschlüssige Verbindung zwischen dem Stift 54 und der Scheibe 55 entsteht (in Figur 2A gezeigt). Das Hebelelement 51 ist dann zwischen der Scheibe 55 und der parallel dazu liegenden Oberfläche der Klappe 53 eingeschlossen.

Das Hebelelement 51 ist über die Spindel 50 drehbar, so dass der Klappenteller 53 zwischen einer Schließstellung und einer Offenstellung bewegbar ist. In der in Figur 2 gezeigten Schließstellung liegt der Klappenteller 53 in der Art einer Fläche zu Fläche-Verbindung auf einem Wastegateventilsitz 293 auf.

Zwischen der Scheibe 55 beziehungsweise dem Klappenteller 53 und dem Hebelelement 51 ist ein axiales Spiel 56, und zwischen dem Stift 54 und dem Hebelelement 51, etwa einer Innenwand 57 der Durchgangsbohrung 52, ein radiales Spiel 58, welche später im verbauten Zustand und im Betrieb des Turboladers 1 einen gewissen Toleranz- und thermischen Verformungsausgleich zwischen den Teilen erlauben, wenn das Wastegateventil 29 schließt und dabei der Klappenteller 53 möglichst eben auf dem Wastegateventilsitz 293 aufliegt. Das radiale und axiale Spiel soll groß genug sein, um die Toleranzen und Verformungen auszugleichen. Gleichzeitig aber auch so klein wie möglich, da es Einfluss auf die akustischen Eigenschaften nimmt. Je größer das Spiel ist, desto lauter hört man dann ein Klappern, Rasseln, Schnarren oder ähnliches im Betrieb. Diese akustischen Störgeräusche sind zu minimieren. Da nun der Nietprozess selber den Stift 54 axial staucht, weitet sich der Stift 54 radial in der Durchgangsbohrung 52 im Hebelelement 51 auf. Ein Durchmesser des Stifts 54 wird größer bei dem Nietprozess. Es muss entsprechend ausreichendes Spiel zwischen den Bauteilen vorgehalten werden. Der Nietprozess selbst unterliegt deutlichen Schwankungen, so dass das Toleranzband entsprechend groß sein muss und das Risiko von akustischen Auffälligkeiten dann vergrößert ist. Zusätzlich ist die Anfälligkeit für Verschleiß der Bauteile bei großem Spiel erhöht.

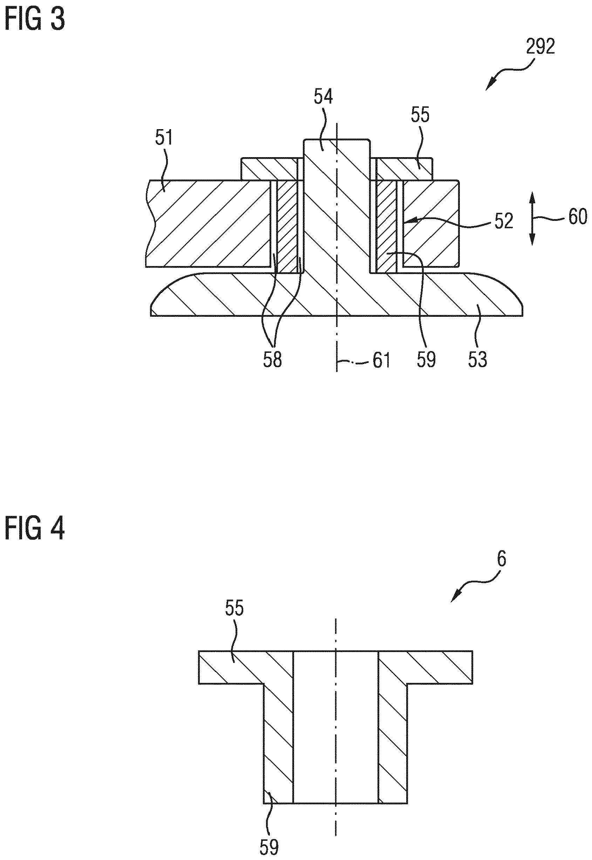

Figur 3 zeigt eine verbesserte Klappeneinrichtung 292, die im Wesentlichen gleich aufgebaut ist. Bei der Klappeneinrichtung 292 ist in der Durchgangsbohrung 52 zwischen dem Hebelelement 51 und dem Stift 54 eine zylindrische, hohlförmige Buchse 59 eingebracht. Die Buchse 59 besteht beispielsweise aus einem hochtemperaturfesten Werkstoff. Das Hebelelement 51 beziehungsweise dessen Durchgangsbohrung 52, die Buchse 59 sowie der Stift 54 sind derart dimensioniert, dass vor dem Vernieten sowohl zwischen Hebelelement 51 und Buchse 59 als auch zwischen Buchse 59 und Stift 54 ein radiales Spiel 58 ausgebildet ist. Die Deckscheibe 55 liegt auf der Buchse 59 auf. Wird dann der aus der Deckscheibe 55 herausstehende Stift 54 vernietet, so wird er bezüglich einer axialen Erstreckungsrichtung 60 der Buchse 59 gestaucht und füllt durch seine radiale Aufweitung in der Buchse 59 diese auf. Die Buchse 59 wird selbst nicht radial aufgeweitet. Die Erstreckungsrichtung 60 ist parallel zu der Bohrungsachse 61 der Durchgangsbohrung 52. Dadurch werden die eingangs erwähnten Vorteile und Funktionen ermöglicht.

Figur 4 zeigt ein weiteres Ausführungsbeispiel, wobei die Deckscheibe 55 und die Buchse 59 einstückig ausgebildet sind.

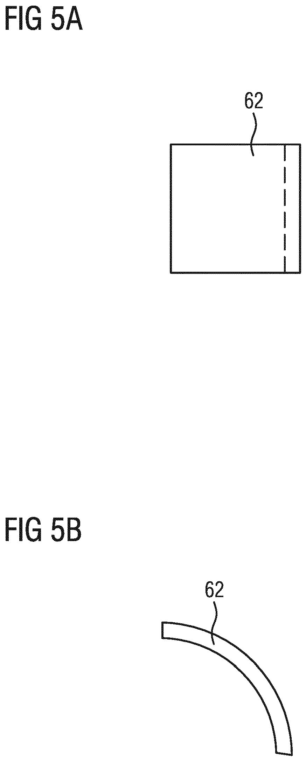

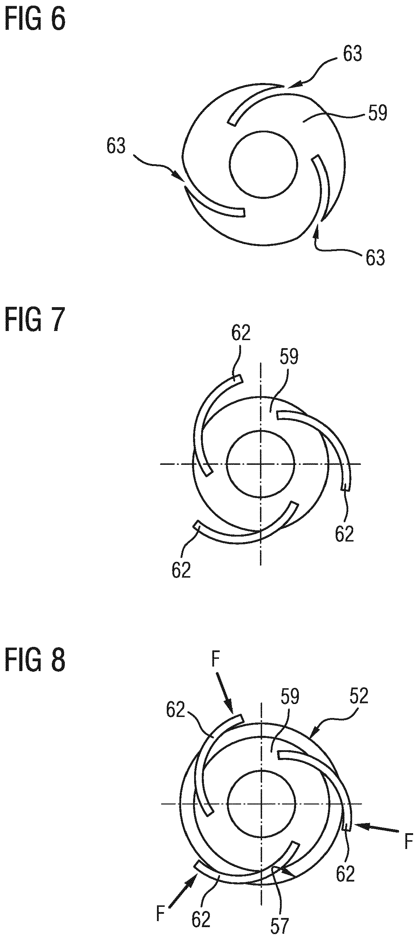

Figuren 5A bis 8 zeigen ein Ausführungsbeispiel der Erfindung. Figur 5A zeigt ein Federblech 62 in einer rechteckigen Form, welches beispielsweise wie in Figur 5B in einer Aufsicht von oben gezeigt, gebogen ist. Mehrere solcher Federbleche 62, etwa drei wie im Ausführungsbeispiel gemäß Figur 7 gezeigt, können nun in eine entsprechende Buchse 59 eingebracht oder eingesteckt werden, wobei die Buchse 59 mehrere zu den Federblechen 62 korrespondierende Nuten 63 aufweist. Der montierte Zustand einer solchen Buchse 59 mit Federblechen 62 ist in Figur 7 gezeigt. Die Federbleche 62 ragen in tangentialer Richtung aus der Buchse 59 heraus.

Bringt man nun auf die Federbleche 62 von außen eine Kraft F, wie in Figur 8 gezeigt, auf, so legen sich die Federbleche 62 an eine Außenseite der Buchse 59 an und können so in die schematisch dargestellte Durchgangsbohrung 52 eingeschoben werden. Lässt man die Kraft F nun weg, so können die Federbleche gegen die Innenwand 57 anschlagen und eine Klemmkraft zwischen Buchse und Durchgangsbohrung 52 bewirken.

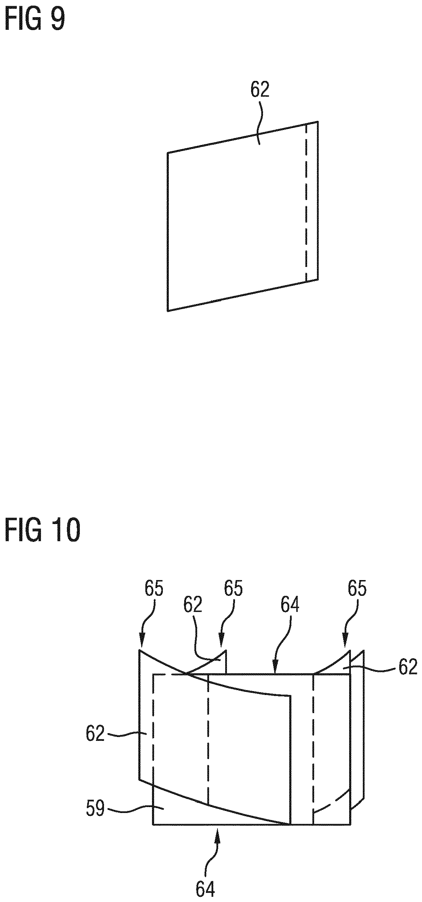

Figur 9 und 10 zeigen schematisch eine weitere Ausführungsform für die beschriebenen Federbleche 62, wobei diese rautenförmig ausgebildet sind. Dadurch steht das Federblech 62 im montierten Zustand vor dem Vernieten axial über die Buchse 59, die in Figur 10 schematisch angedeutet ist, über. Insbesondere steht jedes Federblech 62 über zumindest eines der gegenüberliegenden axialen Enden 64 der Buchse 59 über. Beispielsweise stehen ein oder mehrere Eckbereiche 65 der Federbleche 62 über.

Beim anschließenden Vernieten wird eine axiale Kraft auf die überstehenden Bereiche der Federbleche 62 ausgeübt, so dass neben der zuvor beschriebenen Federwirkung auch eine axiale Federwirkung beziehungsweise Klemmkraftwirkung erreicht wird. Dadurch würden zusätzlich die akustischen Auffälligkeiten reduziert werden.

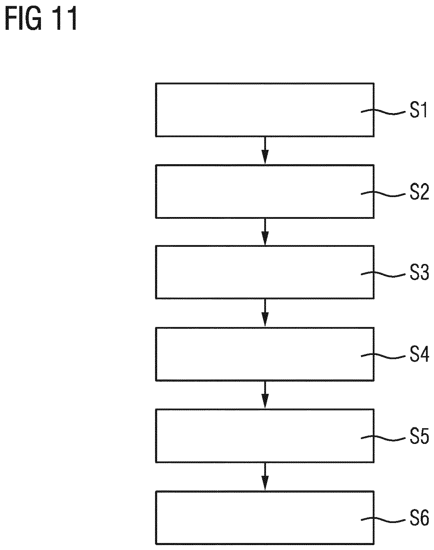

Nachfolgend wird auf das in Figur 11 schematisch gezeigte Ablaufdiagramms eines Herstellungsverfahrens für eine beschriebene Klappeneinrichtung 292 eingegangen.

In einem ersten Schritt S1 wird das Hebelelement 51 bereitgestellt, welches die Durchgangsbohrung 52 aufweist.

In einem weiteren Schritt S2 wird die Buchse 59 die die Durchgangsbohrung 52 eingebracht, etwa gesteckt, wobei n ein oder mehrere Federbleche 62 in die entsprechenden Nuten 63 der Buchse 59 eingebracht werden, bevor die Buchse 59 mit den Federblechen 62 als Baueinheit in die Durchgangsbohrung 52 geführt wird.

In einem weiteren Schritt S3 wird die Klappe 53 mit dem Stift 54 bereitgestellt.

In einem weiteren Schritt S4 wird die Klappe 53 mittels des Stifts 54 an dem Hebelelement 51 angeordnet, wobei der Stift 54 durch die Durchgangsbohrung 52 geführt wird. Dabei ragt der Stift 54 auf der gegenüberliegenden Seite der Bohrung 52 heraus.

In einem weiteren Schritt S5 wird die Deckscheibe 55 auf einer der Klappe 53 gegenüberliegenden Seite derart aufgesetzt, dass der Stift 54 durch die Öffnung 66 der Deckschreibe 55 hinausragt.

In einem weiteren Schritt S6 wird die Klappe 53 mit dem Hebelelement 51 mittels des überstehenden Teils des Stifts 54 vernietet.

Optional können wie eingangs beschrieben weitere Schritte entsprechend der beschriebenen Ausgestaltungen vorgesehen sein.

Abschließend sei an dieser Stelle darauf hingewiesen, dass der in Figur 1 beschriebene Turbolader 1 exemplarisch zu verstehen ist und alternativ auch anderweitige Ausgestaltungen haben kann.

## Patentansprüche

1. Klappeneinrichtung (292) zum Öffnen und Schließen eines Wastegatekanals (291) in einem Turbinengehäuse (21) eines Turboladers (1), aufweisend
- ein Hebelelement (51) mit einer Durchgangsbohrung (52), in der eine zylindrische Buchse (59) angeordnet ist;
- eine Klappe (53) mit einem Stift (54), die so an dem Hebelelement (51) angeordnet ist, dass der Stift (54) durch die Buchse (59) geführt ist; und
- eine Deckscheibe (55), die auf einer der Klappe (53) gegenüberliegenden Seite angeordnet ist und eine Öffnung (66) hat, durch die der Stift (54) der Klappe (53) geführt ist;
wobei die Klappe (53) mittels des Stifts (54) mit dem Hebelelement (51) vernietet ist und
wobei die Buchse (59) zumindest eine Nut (63) aufweist, in welche ein Federblech (62) so eingebracht ist, dass zwischen der Durchgangsbohrung (52) und der Buchse (59) eine radiale Klemmkraft des Federblechs (62) wirkt.

2. Klappeneinrichtung (292) nach Anspruch 1, wobei die Durchgangsbohrung (52), die Buchse (59) und der Stift (54) so zueinander dimensioniert sind, dass vor dem Vernieten zwischen Buchse (59) und Durchgangsbohrung (52) sowie zwischen Buchse (59) und Stift (54) ein radiales Spiel (58) ausgebildet ist.

3. Klappeneinrichtung (292) nach einem der vorhergehenden Ansprüche, wobei die Deckscheibe (55) auf der Buchse (59) aufliegt.

4. Klappeneinrichtung (292) nach einem der Ansprüche 1 oder 2, wobei die Deckscheibe (55) und die Buchse (59) einstückig ausgebildet sind.

5. Klappeneinrichtung (292) nach einem der Ansprüche 1 bis 4, wobei das Federblech (62) so ausgebildet und/oder in die Nut (63) eingebracht ist, dass dieses bezüglich einer axialen Erstreckungsrichtung (60) der Buchse (59) in einem montierten Zustand vor dem Vernieten an zumindest einem axialen Ende (64) der Buchse (59) übersteht, und nach dem Vernieten eine axiale Klemmkraft des Federblechs (62) bezüglich der axialen Erstreckungsrichtung (60) wirkt.

6. Turbolader (1) für eine Brennkraftmaschine, aufweisend
- ein Lagergehäuse (41), in dem eine Läuferwelle (14) drehbar gelagert ist;
- ein Turbinenrad (12), welches drehfest auf der Läuferwelle (14) angeordnet ist;
- ein Turbinengehäuse (21), welches mechanisch an dem Lagergehäuse (41) festgelegt ist;
- einen Wastegatekanal (291), der im Turbinengehäuse (21) ausgebildet ist; und
- eine Klappeneinrichtung (292) nach einem der vorhergehenden Ansprüche, die zum Öffnen und Schließen des Wastegatekanals (291) eingerichtet ist.

7. Verfahren zum Herstellen einer Klappeneinrichtung (292) nach einem der Ansprüche 1 bis 3, aufweisend die Schritte (S1 bis S6):
- Bereitstellen eines Hebelelements (51) mit einer Durchgangsbohrung (52);
- Einbringen einer Buchse (59) in die Durchgangsbohrung (52) des Hebelelements (51),
wobei die Buchse (59) zumindest eine Nut (63) aufweist, vor dem Einbringen der Buchse (59) ein Federblech (62) in die Nut (63) eingebracht wird und die Buchse (59) zusammen mit dem Federblech (62) in die Durchgangsbohrung (52) eingebracht wird, so dass eine radiale Klemmkraft zwischen der Durchgangsbohrung (52) und der Buchse (59) wirkt;
- Bereitstellen einer Klappe (53) mit einem Stift (54);
- Anordnen der Klappe (53) an dem Hebelelement (51) derart, dass der Stift (54) durch die Buchse (59) geführt ist;
- Aufsetzen einer Deckscheibe (55) auf einer der Klappe (53) gegenüberliegenden Seite derart, dass der Stift (54) durch eine Öffnung (66) der Deckschreibe (55) hinausragt;
- Vernieten der Klappe (53) mit dem Hebelelement (51) mittels des hinausragenden Stifts (54).

8. Verfahren nach Anspruch 7, wobei nach dem Anordnen der Klappe (53) an dem Hebelelement (51) zwischen dem Stift (54) und der Buchse (59) sowie zwischen der Buchse (59) und der Durchgangsbohrung (52) jeweils ein radiales Spiel (58) ausgebildet ist.

9. Verfahren nach Anspruch 7 oder 8, wobei das Federblech (62) so ausgebildet und/oder in der Nut (63) angeordnet ist, dass vor dem Vernieten das Federblech (62) zumindest teilweise an einem axialen Ende (64) der Buchse (59) übersteht, und beim Vernieten das Federblech (62) axial verklemmt wird und eine axiale Klemmkraft des Federblechs (62) bezüglich einer axialen Erstreckungsrichtung (60) der Buchse (59) wirkt.

## Claims

1. Flap device (292) for opening and closing a wastegate channel (291) in a turbine housing (21) of a turbocharger (1), having
- a lever element (51) with a through-passage bore (52), in which a cylindrical bushing (59) is arranged;
- a flap (53) with a pin (54), said flap being arranged on the lever element (51) such that the pin (54) is guided through the bushing (59); and
- a cover disc (55), which is arranged on a side opposite the flap (53) and has an opening (66), through which the pin (54) of the flap (53) is guided;
wherein the flap (53) is riveted to the lever element (51) by means of the pin (54), and
wherein the bushing (59) has at least one groove (63), into which a resilient plate (62) is introduced such that a radial clamping force of the resilient plate (62) is active between the through-passage bore (52) and the bushing (59).

2. Flap device (292) according to Claim 1, wherein the through-passage bore (52), the bushing (59) and the pin (54) are dimensioned in relation to one another such that an amount of radial play (58) is present prior to the riveting operation between the bushing (59) and through-passage bore (52) and between the bushing (59) and pin (54).

3. Flap device (292) according to either of the preceding claims, wherein the cover disc (55) rests on the bushing (59).

4. Flap device (292) according to either of Claims 1 and 2, wherein the cover plate (55) and the bushing (59) are formed in one piece.

5. Flap device (292) according to one of Claims 1 to 4, wherein the resilient plate (62) is designed, and/or is introduced into the groove (63), such that said resilient plate in a mounted state, prior to the riveting operation, protrudes at at least one axial end (64) of the bushing (59), as seen in relation to a direction (60) of axial extent of the bushing (59), and, following the riveting operation, an axial clamping force of the resilient plate (62) is active in relation to the direction (60) of axial extent.

6. Turbocharger (1) for an internal combustion engine, having
- a bearing housing (41), in which a rotor shaft (14) is mounted in a rotatable manner;
- a turbine wheel (12), which is arranged in a rotationally fixed manner on the rotor shaft (14);
- a turbine housing (21), which is secured mechanically on the bearing housing (41);
- a wastegate channel (291), which is formed in the turbine housing (21); and
- a flap device (292) according to one of the preceding claims, said flap device being designed to open and close the wastegate channel (291).

7. Method for producing a flap device (292) according to one of Claims 1 to 3, having the following steps (S1 to S6):
- providing a lever element (51) which has a through-passage bore (52);
- introducing a bushing (59) into the through-passage bore (52) of the lever element (51),
wherein the bushing (59) has at least one groove (63), a resilient plate (62) is introduced into the groove (63) prior to the bushing (59) being introduced, and the bushing (59) is introduced into the through-passage bore (52) together with the resilient plate (62), and therefore a radial clamping force is active between the through-passage bore (52) and the bushing (59) ;
- providing a flap (53) which has a pin (54);
- arranging the flap (53) on the lever element (51) such that the pin (54) is guided through the bushing (59);
- positioning a cover disc (55) on a side opposite the flap (53), such that the pin (54) projects out through an opening (66) of the cover disc (55);
- riveting the flap (53) to the lever element (51) by means of the projecting pin (54).

8. Method according to Claim 7, wherein, once the flap (53) has been arranged on the lever element (51), an amount of radial play (58) is present in each case between the pin (54) and the bushing (59) and between the bushing (59) and the through-passage bore (52).

9. Method according to Claim 7 or 8, wherein the resilient plate (62) is designed, and/or arranged in the groove (63), such that, prior to the riveting operation, the resilient plate (62) protrudes at least to some extent at an axial end (64) of the bushing (59) and, during the riveting operation, the resilient plate (62) is clamped axially and an axial clamping force of the resilient plate (62) is active in relation to a direction (60) of axial extent of the bushing (59).

## Revendications

1. Dispositif clapet (292) permettant d'ouvrir et de fermer un conduit de soupape de décharge (291) dans un carter de turbine (21) d'un turbocompresseur (1), comportant
- un élément formant levier (51) doté d'un alésage traversant (52) dans lequel est disposée une douille cylindrique (59) ;
- un clapet (53) doté d'une tige (54) disposée sur l'élément formant levier (51) de telle sorte que la tige (54) est guidée à travers la douille (59) ; et
- un disque de recouvrement (55) qui est disposé sur un côté opposé au clapet (53) et présente un orifice (66) à travers lequel la tige (54) du clapet (53) est guidée ;
dans lequel le clapet (53) est riveté sur l'élément formant levier (51) au moyen de la tige (54), et
dans lequel la douille (59) présente au moins une rainure (63) dans laquelle est introduite une tôle élastique (62) de telle sorte qu'une force de serrage radiale de la tôle élastique (62) agit entre l'alésage traversant (52) et la douille (59).

2. Dispositif clapet (292) selon la revendication 1, dans lequel l'alésage traversant (52), la douille (59) et la tige (54) sont dimensionnées les uns par rapport aux autres de telle sorte qu'avant le rivetage, un jeu radial (58) est réalisé entre la douille (59) et l'alésage traversant (52) ainsi qu'entre la douille (59) et la tige (54).

3. Dispositif clapet (292) selon l'une quelconque des revendications précédentes, dans lequel le disque de recouvrement (55) repose sur la douille (59).

4. Dispositif clapet (292) selon l'une quelconque des revendications 1 ou 2, dans lequel le disque de recouvrement (55) et la douille (59) sont réalisés d'un seul tenant.

5. Dispositif clapet (292) selon l'une quelconque des revendications 1 à 4, dans lequel la tôle élastique (62) est réalisée et/ou insérée dans la rainure (63) de telle sorte qu'elle fait saillie par rapport à une direction d'extension axiale (60) de la douille (59) dans un état assemblé avant le rivetage au niveau d'au moins une extrémité (64) de la douille (59), et qu'après le rivetage, une force de serrage axiale de la tôle élastique (62) agit par rapport à la direction d'extension axiale (60).

6. Turbocompresseur (1) pour une machine à combustion interne, comportant
- un boîtier de roulement (41) dans lequel un arbre de rotor (14) est monté rotatif ;
- une roue de turbine (12) disposée sur l'arbre de rotor (14) de manière verrouillée en rotation ;
- un carter de turbine (21) fixé mécaniquement sur le boîtier de roulement (41) ;
- un conduit de soupape de décharge (291) réalisé dans le carter de turbine (21) ; et
- un dispositif clapet (292) selon l'une quelconque des revendications précédentes configuré pour ouvrir et pour fermer le conduit de soupape de décharge (291).

7. Procédé de fabrication d'un dispositif clapet (292) selon l'une quelconque des revendications 1 à 3, comprenant les étapes (S1 à S6) consistant à :
- fournir un élément faisant levier (51) doté d'un alésage traversant (52) ;
- insérer une douille (59) dans l'alésage traversant (52) de l'élément faisant levier (51),
dans lequel la douille (59) présente au moins une rainure (63), avant l'insertion de la douille (59), une tôle élastique (62) est insérée dans la rainure (63) et la douille (59) est insérée conjointement avec la tôle élastique (62) dans l'alésage traversant (52) de sorte qu'une force de serrage radiale agit entre l'alésage traversant (52) et la douille (59) ;
- fournir un clapet (53) doté d'une tige (54) ;
- disposer le clapet (53) sur l'élément formant levier (51) de telle sorte que la tige (54) est guidée à travers la douille (59) ;
- poser un disque de recouvrement (55) sur un côté opposé au clapet (53) de telle sorte que la tige (54) fait saillie à travers un orifice (66) du disque de recouvrement (55) ;
- riveter le clapet (53) sur l'élément formant levier (51) au moyen de la tige (54) faisant saillie.

8. Procédé selon la revendication 7, dans lequel, après que le clapet (53) a été disposé sur l'élément formant levier (51), un jeu radial (58) est réalisé respectivement entre la tige (54) et la douille (59) ainsi qu'entre la douille (59) et l'alésage traversant (52).

9. Procédé selon la revendication 7 ou 8, dans lequel la tôle élastique (62) est réalisée et/ou insérée dans la rainure (63) de telle sorte qu'avant le rivetage, la tôle élastique (62) fait saillie au moins en partie au niveau d'une extrémité axiale (64) de la douille (59), et la tôle élastique (62) est calée axialement lors du rivetage, et une force de serrage axiale de la tôle élastique (62) agit par rapport à une direction d'extension axiale (60) de la douille (59).
